# EUROPEAN PATENT APPLICATION

(11) **EP 4 184 140 A1**
(43) Date of publication of application: **24.05.2023**
(21) Application number: 21209376.9
(22) Date of filing: 19.11.2021
(51) Int. Cl.: G01M 3/26

(54) **ARRANGEMENT AND METHOD FOR DETECTING A HYDROGEN LEAK IN A HYDROGEN SUPPLY SYSTEM**

(71) Applicant: Airbus S.A.S., 31700 Blagnac (FR); Airbus Operations GmbH, 21129 Hamburg (DE)
(72) Inventor: Berg, Frederick, 21129 Hamburg (DE); Dietl, Karin, 21129 Hamburg (DE)
(74) Representative: KASTEL Patentanwälte PartG mbB

(57) **Abstract**

An arrangement for detecting a hydrogen leak in a hydrogen supply system (11), comprises a hydrogen tank (12) for providing hydrogen (13), a hydrogen supply line (14) for supplying the hydrogen (13) from the hydrogen tank (12) to a hydrogen consumption unit (15, 29), and a restrictor unit (16) arranged in the supply line (14) for limiting the flow of the hydrogen (13) in the supply line (14). A pressure difference sensor unit (17) generates a pressure difference signal (18) representing a pressure difference across the restrictor unit (16). A control unit (19) coupled to the pressure difference sensor unit (17) compares the pressure difference signal (18) with a predefined threshold value, and provides a leak detection signal (20) if the pressure difference signal (18) exceeds the threshold value.

## Description

The invention relates to an arrangement for detecting a hydrogen leak in a hydrogen supply system. Further, the invention relates to a method for detecting a hydrogen leak in a hydrogen supply system. The invention is in particular applicable for a hydrogen supply system of an aircraft.

By using hydrogen as a fuel for propelling aircrafts, gas emissions which have an impact on the climate can be drastically reduced. The hydrogen can be supplied e.g. to fuel cells or fuel cell engines for propelling the aircraft.

The use of hydrogen in aircrafts needs to fulfil strong safety requirements. In particular, a leak in the hydrogen supply system for fuel cells or for combustion engines must be detected as soon as possible in order to implement adequate measures. Pipe or equipment containment failures not detected in a short time could lead to a loss of hydrogen flowing into the surrounding equipment space and thus very quickly to a hazardous situation.

It is the object of the invention to timely detect a leak in a hydrogen supply system so that steps can be taken immediately in order to ensure the safety of the hydrogen supply system and in particular of an aircraft comprising the system. In particular, a leak in a hydrogen supply system for propelling an aircraft shall be detected in a very short time.

The object is achieved by an arrangement for detecting a hydrogen leak in a hydrogen supply system, comprising a hydrogen tank for providing hydrogen, a hydrogen supply line designed for supplying the hydrogen from the hydrogen tank to a hydrogen consumption unit, a restrictor unit arranged in the supply line for limiting the flow of the hydrogen in the supply line, a pressure difference sensor unit designed for generating a pressure difference signal representing a pressure difference across the restrictor unit, and a control unit coupled to the pressure sensor unit, the control unit being configured for comparing the pressure difference signal with a predefined threshold value, and for providing a leak detection signal if the pressure difference signal exceeds the threshold value.

The invention enables a timely and reliable detection of the leak so that steps can be taken to ensure the safety of the hydrogen supply system and in particular of the aircraft. These steps may e.g. comprise an activation of shut-off valves from supply, turning off equipment, venting compartments, etc. In particular, a depressurization of the system, which may be large and sudden depending on the leak, and a loss of hydrogen into the surrounding space can be avoided by the invention.

Preferably, the restrictor unit comprises a reduced internal cross-section or cross-sectional area for the flow of hydrogen compared to the cross section or cross-sectional area of the supply line adjacent to the restrictor. In particular, the internal cross-sectional area of the restrictor is reduced compared to the cross-sectional area of the supply line upstream of the restrictor.

Preferably, the restrictor unit comprises a Venturi tube and/or an orifice member.

The Venturi tube or other orifice member sized correctly and e.g. located at an inlet to a suitable volume of pipes, can limit the flow from the tank e.g. by using the Venturi effect.

Preferably, the predefined threshold value is higher than the pressure difference across the restrictor unit at normal operation.

Preferably, the arrangement comprises a purge valve configured for purging the supply system, and a pressure difference sensor unit configured for detecting a pressure difference across the purge valve.

Preferably, the control unit is adapted to trigger a safety procedure if the pressure difference across the purge valve is lower than a predefined value.

Preferably, the control unit is configured for combining the pressure difference signal with a purge valve signal representing the status of the purge valve before the pressure difference signal is compared with the threshold value.

According to an aspect of the invention, a method for detecting a hydrogen leak in a hydrogen supply system is provided, comprising the steps: providing hydrogen in a tank and supplying the hydrogen through a supply line to a hydrogen consumption unit; limiting the flow of the hydrogen in the supply line by a restrictor unit; generating a pressure difference signal representing a pressure difference across the restrictor unit; comparing the pressure difference signal with a predefined threshold value; and providing a leak detection signal if the pressure difference signal exceeds the threshold value.

Preferably, the flow of the hydrogen is limited by a restrictor unit comprising a reduced internal cross-sectional area for the flow of hydrogen.

In particular, the restrictor unit may comprise a reduced cross-sectional area for the flow of hydrogen compared to the cross-sectional area of the supply line upstream of the restrictor unit.

Preferably, the flow of the hydrogen is limited by a Venturi tube and/or by an orifice member used as the restrictor unit.

Preferably, the predefined threshold value is higher than the pressure difference across the restrictor unit at normal operation.

Preferably, the pressure difference signal is combined with a purge valve signal representing the status of a purge valve before the pressure difference signal is compared with the threshold value.

Preferably, a pressure difference across the purge valve is detected.

In particular, the purge valve is configured for purging the supply system. For detecting the pressure difference across the purge valve, a pressure difference sensor unit may be provided.

Preferably, a safety procedure is triggered if the pressure difference across the purge valve is lower than a predefined value.

Preferably, a pressure difference signal representing the pressure difference across the purge valve is combined with a purge valve signal representing the status of the purge valve, before the pressure difference signal representing the pressure difference across the restrictor unit is compared with the threshold value.

According to a further aspect of the invention, an aircraft is provided which comprises the arrangement according to the invention and/or which is operated by using the method according to the invention.

The invention is based on the following thoughts: If a member with a reduced internal cross-section like e.g. a Venturi tube or an orifice member is provided in a hydrogen supply line, the pressure difference e.g. across the Venturi tube or orifice member under normal fuel cell use can be predicted. It will always remain under a small threshold. However, when a burst or significant leak occurs, the pressure difference across such a member will rise sharply due to the orifice choking and hence limiting the flow rate. Since the speed of sound in gaseous hydrogen is extremely fast, any sudden leak in the system can be detected very quickly in this way. Any larger leakages or pipe bursts downstream of the restrictor will be quickly detected as well.

The invention prevents that e.g. pipe or equipment containment failures could lead to a large and sudden depressurisation of the system and a loss of hydrogen into the surrounding equipment space, which could lead very quickly to a hazardous situation.

A further advantage of the invention is that the pressure sensor arrangement used here can be easily and quickly interpreted by a relatively simple controller module leading to correct and reliable results.

In particular, the invention provides a technical solution for the implementation of safe hydrogen supply systems in particular for use in aircrafts and aircraft propulsion systems

Characteristics and advantages described in relation to the arrangement for detecting a hydrogen leak in a hydrogen supply system are also related to the method for detecting a hydrogen leak in a hydrogen supply system, and vice versa.

In the following, exemplary embodiments of the invention showing further advantages and characteristics are described in detail with reference to the accompanying figures, in which:
- **Fig. 1**: shows a schematic diagram of a hydrogen supply system for a fuel cell stack comprising a leak detection arrangement according to a first preferred embodiment of the invention;
- **Fig. 2**: shows a schematic diagram of a hydrogen supply system for a hydrogen driven engine comprising a leak detection arrangement according to a second preferred embodiment of the invention;
- **Fig. 3**: shows an enlarged schematic sectional view of a pressure difference sensor arrangement attached to a restrictor unit according to a preferred embodiment of the invention.
- **Fig. 4**: shows an exemplary schematic diagram of pressure signals upstream and downstream of a restrictor unit and their pressure difference signal at a time period in which a leak occurs; and
- **Fig. 5**: shows a schematic block diagram of an exemplary leak detection logic.

In the figures, similar or identical elements and features are designated by the same reference numbers. The same applies for elements having the same or a similar function. Their description will only be repeated where it seems useful for understanding. Technical features described in one embodiment of the invention may also apply to one or more of the other embodiments described herein.

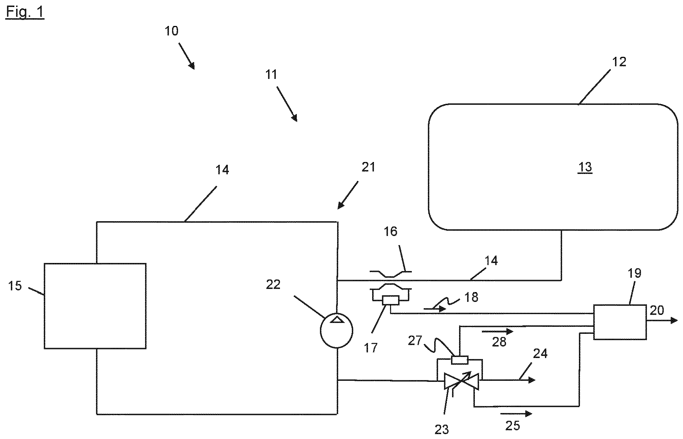

**Figure 1** shows an arrangement 10 for detecting a leak in a hydrogen supply system 11 according to a preferred embodiment of the invention. The arrangement 10 comprises a hydrogen tank 12 for providing hydrogen 13 which is stored in the tank 12. A hydrogen supply line 14 extends from tank 12 to a hydrogen consumption unit 15. The hydrogen supply line 14 is designed for supplying the hydrogen 13 from hydrogen tank 12 to the hydrogen consumption unit 15. In the hydrogen supply line 14, a restrictor unit 16 is arranged, which is configured for limiting the flow of the hydrogen in the supply line 14.

The arrangement 10 further comprises a pressure difference sensor unit 17 which is designed for generating a pressure difference signal 18 representing a pressure difference across the restrictor unit 16. The pressure difference sensor unit 17 is coupled to a control unit 19 which is configured for comparing the pressure difference signal 18 received from pressure difference sensor unit 17 with a predefined threshold value, and for providing a leak detection signal 20 if the pressure difference signal 18 exceeds the threshold value.

In the preferred embodiment, the restrictor unit 16 is formed as a Venturi tube or may comprise a Venturi tube. It is sized correctly and located at the inlet to a suitable volume of pipes 21. However, the restrictor unit 16 may also be formed as an orifice member.

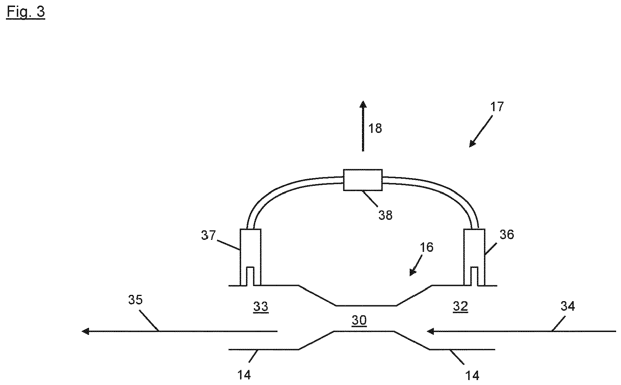

The restrictor unit 16 comprises a reduced internal cross-sectional area for the flow of hydrogen compared to the cross-sectional area of the adjacent supply line 14 upstream of the restrictor unit 16. Further details of restrictor or Venturi unit 16 are described below with reference to Fig. 3.

The hydrogen consumption unit 15 being connected to supply line 14 comprises a fuel cell stack to which the hydrogen is fed through supply line 14 after it has passed the restrictor unit or Venturi restrictor 16.

The predefined threshold value to which the pressure difference signal 18 is compared by control unit 19 is higher than the pressure difference across the restrictor unit 17 during normal operation of the hydrogen supply system 11, i.e. when there is no leak in the hydrogen supply system.

A pipe arrangement 21 located downstream of restrictor unit 16 comprises a pump or recirculation pump 22 which is configured to provide a circular flow of hydrogen through the consumer or fuel cell stack 15.

The hydrogen supply system 11 further comprises a purge valve 23 for providing a purge function within the system 11, and it may also comprise conditioning equipment not shown in the figure. During a purge operation, the purge valve 23 is open so that a gas flow 24 exits from the system 11 to the atmosphere.

Preferably, a purge valve signal 25 indicating when the purge valve 23 is open is supplied via a signal connection to control unit 19. In this way, a pressure drop across the restrictor unit 16 which is caused by a purge event will not be mistaken for a burst, i.e. it will not be interpreted by the control unit 19 as a leak in the hydrogen supply system 21.

A second pressure difference sensor unit 27 may be provided for detecting a pressure difference across the purge valve 23, i.e. it determines the difference between the pressure upstream and downstream of the purge valve 23. Pressure difference signal 28 representing the pressure difference is also provided to the control unit 19. In this way, during the purge period which may last e.g. for a few seconds, a leak can be detected by the second pressure difference sensor arrangement or unit 27 across the purge valve 23. When the pressure difference detected by pressure difference sensor arrangement 27 is lower than expected, i.e. lower than a predefined threshold value, the control unit 19 triggers emergency safety procedures.

Further details of the control unit 19 will be explained below.

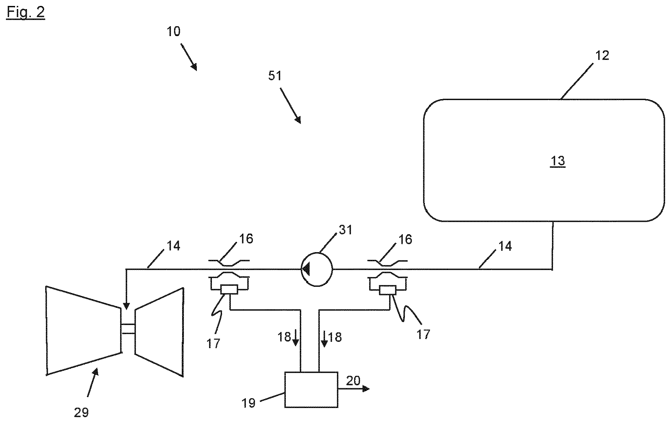

Referring now to **Fig. 2****,** a second preferred embodiment of the invention will be described in detail. Here, the arrangement 10 comprises a hydrogen supply system 51, in which the hydrogen consumer is formed by at least one engine 29 using hydrogen as fuel. Tank 12 containing the hydrogen 13 is connected via supply line 14 to engine 29.

A hydrogen fuel pump 31 is arranged in supply line 14 in order to pump the hydrogen to the engine 29, which is for example a fuel cell propulsion system or a combustion engine that uses hydrogen as a fuel.

Arranged in the supply line 14 are two restrictor units 16 which may comprise or be formed by a Venturi tube and/or an orifice member. One of them is positioned upstream of pump 31 and the other one is positioned downstream of pump 31. For each restrictor unit 16, a pressure difference sensor unit or sensor arrangement 17 is provided for generating a pressure difference signal 18 representing the pressure difference across the respective restrictor unit 16, i.e. the difference of the pressure upstream and downstream of each restrictor unit 16. Details of restrictor unit 16 and of pressure sensor units 17 have already been described above with reference to Fig. 1.

It is noted that also only one restrictor unit 16 provided with a pressure difference sensor unit 17 can be arranged in supply line 14.

Like in the embodiment shown in Fig. 1, control unit 19 is coupled to the pressure sensor unit or units 17 and configured for comparing the respective pressure difference signal 18 with a predetermined threshold value, and for providing leak detection signal 20 if the pressure difference signal 18 exceeds the predefined threshold value.

**Figure 3** shows a schematic sectional view of the restrictor unit 16 provided with the pressure difference sensor unit 17 as used in the embodiments described above with reference to Figs. 1 and 2. The restrictor unit 16 comprises a Venturi tube having a reduced internal cross-sectional area 30 compared to the cross-sectional area 32 and 33 upstream and downstream thereof. Arrow 34 indicates the hydrogen flow from tank 12 upstream of the restrictor unit 16, and arrow 35 indicates the hydrogen flow to the hydrogen consumer 15, 29 downstream of the restrictor unit 16 (see Figs. 1 and 2).

The pressure difference sensor arrangement or unit 17 comprises a first pressure port 36 which is connected to supply line 14 upstream of Venturi tube or orifice 31, and a second pressure port 37 which is connected to supply line 14 downstream of the Venturi tube or orifice 31. Both pressure parts 36 and 37 are connected to a pressure difference sensor 38 which determines the pressure difference between pressure ports 36 and 37 and which provides pressure difference signal 18 for being received by control unit 19, as depicted in Figs. 1 and 2.

The second pressure difference sensor unit 27 described above with reference to Fig. 2 is preferably configured in the same way, however arranged across the purge valve.

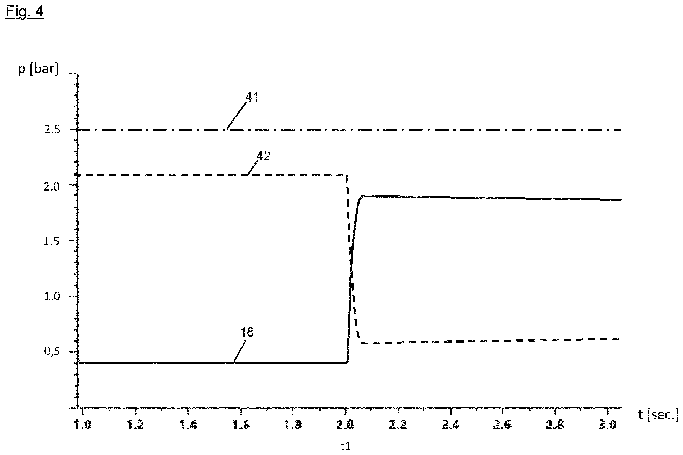

Fig. 4 depicts the pressures at the restrictor unit 16 shown in Figs. 1 and 2 over the time t. A first pressure signal 41 represents the pressure upstream of restrictor or Venturi unit 16 and a second pressure signal 42 represents the pressure downstream of the restrictor unit 16. Pressure difference signal 18 represents the difference of the pressure upstream and downstream of the restrictor unit 16, i.e. the difference between pressure signals 41 and 42.

The control scheme compares pressure difference 18 to a threshold value which is determined exactly for the respective system and the sizing of the restrictor unit or Venturi tube 16. Key is to detect a pressure drop that indicates that the Venturi has choked, but not to detect small pressure drops which are expected in normal operation.

As shown in figure 4, a pressure drop is indicated by pressure signal 42 at a time t1. That causes immediately a sharp increase of the pressure difference signal 18 at the same time.

If the pressure difference indicated by pressure difference signal 18 exceeds the predefined threshold, a signal is sent to e.g. an engine supervisor or other control system in order to trigger mitigation procedures and to protect the engine and aircraft. The signal is e.g. indicated by reference number 20 in Figs. 1 and 2.

The exact control system may vary while still using the pressure difference detection method. Possible mitigation measures may e.g. comprise one or more of the following measures: turning off the hydrogen supply to the affected section of the system; venting the system with outside air by opening some external flaps or redirecting ram air or compressed air from the engine; inert the system with a readily available inert gas like e.g. nitrogen; consume the spare oxygen in the engine cavity with a fast chemical reaction; turn off the engine; alert the pilot; and/or reconfigure the propulsion system. The engine is for example a fuel cell propulsion system or a combustion engine that uses hydrogen as fuel.

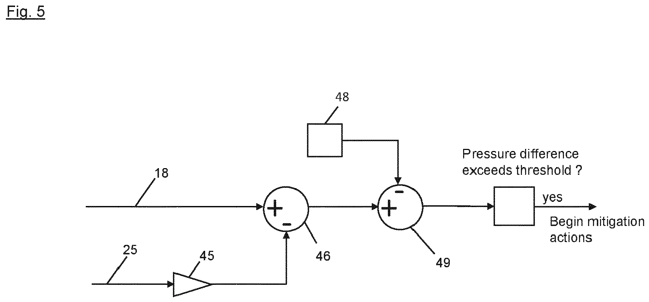

Referring now to **Fig. 5****,** a preferred example of a leak detection logic realised for example by control unit 19 is explained in detail. The logic is configured for dealing with a pressure drop in purge events in fuel cell systems as shown for example in Fig. 1.

During a purge event, which may happen at regular intervals like e.g. around every 2 to 5 minutes during normal operation, purge valve 23 is opened and may produce a change in the pressure difference signal 18 (see Fig. 1). This may, depending on the design of the system, lead to a pressure drop across the Venturi or restrictor unit 16 that could be taken for a burst.

To avoid this situation, the purge valve signal 25, which may also be a purge valve control signal, is combined with pressure difference signal 18 to neutralise the detection during the purge period.

The exact implementation depends on the control system being used. A solution which is shown here is to negate the pressure drop signal during a purge event by subtracting the purge opening signal, increased by a large gain from the pressure difference (see first subtraction 46 in figure 4).

The purge valve signal 25 indicates for example 1 if purge valve 23 is open and 0 if it is closed. After passing gain 45, the purge valve signal 25 is combined with pressure difference signal 18 to neutralise the detection during the purge period.

Then, the resulting signal is combined with threshold pressure difference value 48 as indicated by reference number 49 in figure 4. Here, a second subtraction takes place. If the pressure difference exceeds the threshold, mitigation actions will be started.

The pressure sensor arrangement 17 shown in Figs. 1 and 2 is a general solution for detecting a hydrogen leak by measuring the pressure drop across the Venturi tube or restrictor unit 16, which is e.g. located at the inlet to are contained part of the system were the leak needs to be detected, or within that system.

During the purge period, which may last e.g. for a few seconds, a leak can be detected by the second pressure difference sensor arrangement 27 across purge valve 23 as depicted in Fig. 1. If the pressure difference detected by the second pressure difference sensor arrangement 27 is lower than expected, i.e. lower than a predefined threshold value, emergency safety procedures are started.

Referring again to **Figs. 1** **and** **2****,** a preferred example of a method for detecting a hydrogen leak in a hydrogen supply system is described.

In the method, hydrogen 13 is provided in tank 13 and supplied through supply line 14 to hydrogen consumption unit 15, 29, which is for example a fuel cell unit or engine using hydrogen as fuel.

The flow of hydrogen 13 in supply line 14 is limited by restrictor unit 16. Restrictor unit 16 comprises for example a reduced internal cross-sectional area 30 as shown in Fig. 3. Preferably it is formed by a Venturi tube or by an orifice member.

The pressure difference sensor unit 17 generates a pressure difference signal 18 representing a pressure difference across the restrictor unit 16.

The pressure difference signal 18 is compared with a predefined threshold value by control unit 19. If the pressure difference signal exceeds the threshold value, leak detection signal 20 is provided by the control unit 19.

In order to avoid that leak detection signal 20 is erroneously provided due to a purge operation, purge valve signal 25 indicating the purge operation is generated and being processed by a logic. In this case, no leak detection signal 20 is generated.

In order to detect a leak during the purge operation, the pressure difference across purge valve 23 is detected by second pressure difference sensor arrangement 27. If that pressure difference is lower than a predefined threshold value, a safety procedure is triggered.

The method is preferably performed by using the arrangement as described above in detail.

Further advantages of the invention are for example a quick and inexpensive pressure difference reading in one location., and a purge function which could give similar readings to a sudden pipe leakage can be compensated by zeroing the pressure difference signal during purge opening.

### List of reference numbers:

- 10: arrangement
- 11: hydrogen supply system
- 12: tank
- 13: hydrogen
- 14: supply line
- 15: consumption unit
- 16: restrictor unit
- 17: pressure difference sensor unit
- 18: pressure difference signal
- 19: control unit
- 20: leak detection signal
- 21: pipe arrangement
- 22: pump
- 23: purge valve
- 24: gas flow
- 25: purge valve signal
- 27: second pressure difference sensor unit
- 28: Pressure difference signal
- 29: engine
- 31: hydrogen fuel pump
- 30: cross-sectional area
- 32, 33: cross-sectional areas upstream/downstream
- 34: hydrogen flow from tank
- 35: hydrogen flow to consumer
- 36, 37: pressure ports
- 38: pressure difference sensor
- 41, 42: pressure signals
- 45: gain
- 48: threshold pressure difference value
- 51: hydrogen supply system

## Claims

1. Arrangement for detecting a hydrogen leak in a hydrogen supply system (11, 51), comprising
a hydrogen tank (12) for providing hydrogen (13),
a hydrogen supply line (14) designed for supplying the hydrogen (13) from the hydrogen tank (12) to a hydrogen consumption unit (15, 29),
a restrictor unit (16) arranged in the supply line (14) for limiting the flow of the hydrogen (13) in the supply line (14),
a pressure difference sensor unit (17) designed for generating a pressure difference signal (18) representing a pressure difference across the restrictor unit (16), and
a control unit (19) coupled to the pressure difference sensor unit (17), the control unit (19) being configured for comparing the pressure difference signal (18) with a predefined threshold value, and for providing a leak detection signal (20) if the pressure difference signal (18) exceeds the threshold value.

2. Arrangement according to claim 1, **characterized in that** the restrictor unit (16) comprises a reduced internal cross-sectional area (30) for the flow of hydrogen (13) compared to the cross-sectional area (32, 33) of the adjacent supply line (14).

3. Arrangement according to claim 1 or 2, **characterized in that** the restrictor unit (16) comprises a Venturi tube and/or an orifice member.

4. Arrangement according to one of the preceding claims, **characterized in that** the predefined threshold value is higher than the pressure difference across the restrictor unit (16) at normal operation.

5. Arrangement according to one of the preceding claims, **characterized by** a purge valve (23) configured for purging the supply system (11), and a pressure difference sensor unit (27) configured for detecting a pressure difference across the purge valve (23).

6. Arrangement according to claim 5, wherein the control unit (19) is adapted to trigger a safety procedure if the pressure difference across the purge valve (23) is lower than a predefined value.

7. Arrangement according to claim 5 or 6, wherein the control unit (19) is configured for combining the pressure difference signal (18) with a purge valve signal (25) representing the status of the purge valve (23) before the pressure difference signal (18) is compared with the threshold value.

8. Method for detecting a hydrogen leak in a hydrogen supply system (11, 51), comprising the steps:
providing hydrogen (13) in a tank (12) and supplying the hydrogen (13) through a supply line (14) to a hydrogen consumption unit (15, 29);
limiting the flow of the hydrogen (13) in the supply line (14) by a restrictor unit (16);
generating a pressure difference signal (18) representing a pressure difference across the restrictor unit (16);
comparing the pressure difference signal (18) with a predefined threshold value; and
providing a leak detection signal if the pressure difference signal (18) exceeds the threshold value.

9. Method according to claim 8, **characterized in that** the flow of the hydrogen (13) is limited by a reduced internal cross-sectional area (30) for the flow of hydrogen (13).

10. Method according to claim 8 or 9, **characterized in that** the flow of the hydrogen (13) is limited by a Venturi tube and/or by an orifice member.

11. Method according to one of claims 8 to 10, **characterized in that** the predefined threshold value is higher than the pressure difference across the restrictor unit (16) at normal operation.

12. Method according to one of claims 8 to 11, **characterized in that** a pressure difference across a purge valve (23) is detected.

13. Method according to claim 12, **characterized in that** a safety procedure is triggered if the pressure difference across the purge valve (23) is lower than a predefined value.

14. Method according to claim 12 or 13, **characterized in that** a pressure difference signal (28) representing the pressure difference across the purge valve (23) is combined with a purge valve signal (25) representing the status of the purge valve (23), before the pressure difference signal (18) representing the pressure difference across the restrictor unit (16) is compared with the threshold value.

15. Aircraft, comprising the arrangement according to one of claims 1 to 7 and/or being operated by using the method according to one of claims 8 to 14.
